# EUROPÄISCHE PATENTSCHRIFT

(11) **EP 1 745 726 B1**
(45) Veröffentlichungstag und Bekanntmachung des Hinweises auf die Patenterteilung: **10.12.2008**
(21) Anmeldenummer: 06014206.4
(22) Anmeldetag: 08.07.2006
(51) Int. Cl.: A47J 31/44

(54) **Kaffeeautomat mit einer höhenverstellbaren und arretierbaren Auslaufeinheit**
Automated coffee machine with height-adjustable and arrestable outlet unit
Automate à café avec unité d'écoulement réglable et arrêtable en hauteur

(30) Priorität: 21.07.2005 DE 202005011476 U
(43) Veröffentlichungstag der Anmeldung: 24.01.2007
(73) Patentinhaber: Eugster/Frismag AG, 8590 Romanshorn (CH)
(72) Erfinder: Oehninger, Max, 8712 Stäfa ZH (CH)
(74) Vertreter: Schubert, Siegmar

(56) Entgegenhaltungen:
- EP-A- 1 407 698
- WO-A-20/04023949
- DE-U1- 20 017 859
- DE-U1- 29 810 291

## Beschreibung

Die Erfindung betrifft einen Kaffeeautomaten mit einer höhenverstellbaren und arretierbaren Auslaufeinheit nach dem Oberbegriff des Anspruchs 1.

Mit derartigen aus der Praxis bekannten Kaffeeautomaten können verschiedene Kaffeezubereitungen gewählt werden, für die unterschiedliche Portionen bzw. Flüssigkeitsmengen typisch sind und demzufolge unterschiedliche Tassengrößen zu verwenden sind. Beispielsweise sind Tässchen für Espresso deutlich kleiner, insbesondere weniger hoch, als Kaffeetassen oder Tassen für Cappuccino. Für große Kaffeeportionen können Becher verwendet werden. Um einen einwandfreien Einlauf der Kaffeezubereitung in die Gefäße unterschiedlicher Größe, insbesondere Höhe, zu erreichen, weisen aus der Praxis bekannte Kaffeeautomaten bereits eine entsprechend der Größe, insbesondere Höhe, des aufnehmenden Gefäßes über einer Gefäßauflage bzw. Tassenauflage höhenverstellbare Auslaufeinheit auf. Zur höhenverstellbaren Lagerung der Auslaufeinheit dient in der Regel eine Nut-Federschieberanordnung. Weiterhin kann die Auslaufeinheit eine Klemmeinrichtung aufweisen, um die eingestellte Auslaufhöhe zu arretieren. - Diese Nut-Federschieberanordnungen können jedoch, wenn sie nicht präzise und aufwendig hergestellt sind, schwer verstellbar sein oder aber großes Spiel aufweisen. In Verbindung mit der Klemmeinrichtung erfordern sie Aufmerksamkeit bzw. Geschick zum Verstellen und sicheren Arretieren. Sie vermitteln bei der Bedienung keinen wertigen Eindruck.

Technisch aufwendig ist auch ein bekannter Getränkespender, insbesondere ein Kaffeeautomat der eingangs genannten Gattung mit einer Auslaufvorrichtung für das Getränk sowie einer Tassenauflage, wobei ein Höhenabstand zwischen einem Auslaufteil bzw. einer Auslaufeinheit und der Tassenauflage stufenlos verstellbar ist und mittels einer Arretiervorrichtung arretierbar ist, die einerseits mit einem beweglichen Teil und andererseits mit einem feststehenden Teil des Getränkespenders in Wirkverbindung steht, wobei das bewegliche Teil benachbart zu dem feststehenden Teil zwei in horizontalem Abstand parallel angeordnete Schiebekulissen aufweist, welche jeweils in einem Gleitstück höhenverstellbar sind (DE 298 10 291.9 A). Im einzelnen ist jede Schiebekulisse annähernd U-förmig mit einem inneren Schenkel und einem äußeren Schenkel ausgebildet und jedes Gleitstück ist ein Gleitwinkel mit zwei Schenkeln, von denen jeweils der erste Schenkel eine feste Einheit mit dem feststehenden Teil bildet und zumindest ein Abschnitt des zweiten Schenkels von dem inneren Schenkel und dem äußeren Schenkel der Schiebekulisse umgriffen wird. Zur Arretierung können die äußeren Schenkel der Schiebekulisse auf ihrer dem feststehenden Teil zugewandten Außenseite einen Streifen aus ferromagnetischem Material aufweisen, dem gegenüber ein Magnet an dem feststehenden Teil angebracht ist. Analog umgekehrt können die äußeren Schenkel der Schiebekulisse auf ihrer dem feststehenden Teil zugewandten Außenseite den Magneten aufweisen, dem gegenüber der Streifen aus ferromagnetischem Material an dem feststehenden Teil fest angeordnet ist.

Der vorliegenden Erfindung liegt daher die Aufgabe zugrunde, einen rationell herstellbaren Kaffeeautomaten mit einer höhenverstellbaren und arretierbaren Auslaufeinheit der eingangs genannten Gattung so weiterzubilden, daß die Auslaufeinheit bei gelöster Arretierung präzise und leichtgängig zu verstellen ist.

Diese Aufgabe wird für den Kaffeeautomaten mit den in Anspruch 1 angegebenen Merkmalen gelöst.

Damit wird eine reibungs- und verschleißarme Lagerung der Auslaufeinheit mittels eines Längskugellagers als erstes Lagerelement, welches eine vertikale Längskugellagerachse als zweites Lagerelement umfaßt, an dem Gehäuse des Kaffeeautomaten erreicht, so daß die Auslaufeinheit bequem verstellt werden kann und anschließend arretiert werden kann. Eines der beiden ersten und zweiten Lagerelemente ist dabei mit dem Gehäuse verbunden und das andere der beiden Lagerelemente steht mit dem Gehäuse in fester Verbindung. Zwei kompakte Varianten dieser Lageranordnung sind in den Ansprüchen 2 und 3 angegeben. Die Auslaufeinheit kann in der Höheneinstellung einfach und verlässig mit wenigstens zwei Arretierungselementen gemäß Anspruch 8 arretiert werden, von denen ein erstes mit der Auslaufeinheit, insbesondere dessen Aufnahmechassis, in Verbindung steht und das zweite an einem Gehäuse des Kaffeeautomaten angebracht ist. Der Kaffeeautomat mit einer solchen höhenverstellbaren und arretierbaren Auslaufeinheit kann außerdem ästhetisch besonders ansprechend sein und den Eindruck einer wertigen Haptik vermitteln.

Insbesondere kann das Magnetfeld eines Haftmagneten, in dem sich das ferromagnetische Arretierungselement befindet, gemäß Anspruch 8 unkompliziert direkt zum Bilden einer Haftkraft zwischen der Auslaufeinheit und dem Gehäuse des Kaffeeautomaten genutzt werden.

In einer Ausbildung gemäß Anspruch 10 ist es statt dessen auch möglich, das Aufnahmechassis als Bestandteil der Auslaufeinheit über eine vertikale Zahnstange und eine Getriebeverbindung mit einem Antriebsmotor zu verstellen. Eine Arretierung der auf eine entsprechende der Tassenhöhe eingestellten Auslaufeinheit kann bei selbsthemmender Ausführung des Antriebsmotors mit der Getriebeverbindung einfach durch Abschalten des Antriebsmotors erfolgen, also keine gesonderte Manipulation erfordern. - Zu der Getriebeverbindung gehört ein Getriebe und nach Anspruch 11 insbesondere ein mit dem Antriebsmotor in Verbindung stehendes Antriebsritzel, welches in die Zahnstange eingreift.

Der Kaffeeautomat ist im Bereich der höhenverstellbaren und arretierbaren Auslaufeinheit weiterhin besonders zweckmäßig gemäß den Ansprüchen 2 bis 7 ausgebildet.

Gemäß Anspruch 2 ist die Längskugellagerachse vertikal an einem Träger angebracht, der seinerseits mit dem Gehäuse des Kaffeeautomaten fest verbunden ist. Das Gehäuse des Kaffeeautomaten braucht daher, abgesehen von der Anbringung des Trägers, nicht zur Montage der Längskugelachse bearbeitet zu werden. Außerdem kann der Träger leicht austauschbar an dem Gehäuse angebracht sein.

Nach Anspruch 4 ist das Aufnahmechassis der Auslaufeinheit mit einer vertikalen Wand ausgebildet, welche einen Raum, in dem das Kaffeeauslaufrohr und ein mit diesem verbundener Abschnitt einer Kaffeezulaufleitung angeordnet sind, von einem weiteren Raum trennt, in welchem das Längskugellager und ein Arretierungselement bzw. ein Antriebselement zur Höhenverstellung des Aufnahmechassis angeordnet sind. Das Aufnahmechassis kann so direkt mit einem weiteren Arretierungselement bzw. einem Antriebselement, die nach außen geschützt sind, zusammenwirken.

In der Ausbildung gemäß Anspruch 5 kragt von der ersten Seite des Aufnahmechassis ein waagerechter Wandabschnitt vor, welcher das Kaffeeauslaufrohr trägt.

Statt eines Kaffeeauslaufrohrs können an dieser Stelle auch wenigstens zwei Auslaufrohre vorgesehen sein, die von einem Auslaufverteiler mit gegenseitigem Abstand unten hervorstehen, wobei der Auslaufverteiler von dem waagerechten Wandabschnitt getragen wird.

Das Längskugellager ist geschützt und mechanisch stabil in einem Vorsprung untergebracht, welches von der zweiten Seite des Aufnahmechassis hervorsteht. An diesem Vorsprung kann auch zweckmäßig die Arretierung angreifen bzw. ein Arretierungselement angeordnet sein.

Gemäß Anspruch 7 ist das Aufnahmechassis glattflächig und hygienisch durch eine Kappe abgeschlossen, welche das Aufnahmechassis im wesentlichen mit Ausnahme der dem Gehäuse des Kaffeeautomaten bzw. dem Träger zugewandten Seite abdeckt, so daß die Verbindung des Aufnahmechassis zu den Elementen der Höhenverstellung bzw. Arretierung, die an oder in dem Gehäuse des Kaffeeautomaten angeordnet sind, gewährleistet ist.

Bei der oben erwähnten Ausbildung der Arretierung nach Anspruch 8 mit einem Haftmagnet als einem der beiden Arretierungselemente und mit einem ferromagnetischen zweiten Arretierungselement ist vorzugsweise gemäß Anspruch 9 der Haftmagnet in einer Ausnehmung des Aufnahmechassis, nämlich in dem Vorsprung des Aufnahmechassis, horizontal begrenzt verschiebbar angeordnet. Das mit dem Haftmagneten zusammenwirkende ferromagnetische Arretierungselement an dem Gehäuse, welches dem Haftmagneten im wesentlichen gegenübersteht, kann zweckmäßig durch den an dem Gehäuse angebrachten Träger der Längskugellagerachse realisiert sein. Zur Höhenverstellung kann die Auslaufeinheit manuell ergriffen und angehoben oder abgesenkt werden, wobei der Haftmagnet auf dem ferromagnetischen Arretierungselement mit definierter Reibung gleitet, aber nicht verklemmt, weil er horizontal verschiebbar ist. Nach Loslassen der Auslaufeinheit wird diese durch die Haftkraft zwischen dem Haftmagneten und dem ferromagnetischen Arretierungselement ohne weiteres sicher gehalten.

Bei der oben erwähnten Verstelleinrichtung und Arretierung mit einem Antriebsmotor, welcher über eine Getriebeverbindung mit dem Aufnahmechassis in Verbindung steht, ist nach Anspruch 10 eine vertikale Zahnstange an dem Aufnahmechassis angebracht, und zwar bevorzugt an dem oben genannten Vorsprung auf der zweiten Seite der vertikalen Wand des Aufnahmechassis, wo sie ungehindert mit einer Getriebeverbindung zu dem Antriebsmotor bzw. einem Antriebsritzel in Eingriff gelangen kann.

Bei Ausbildung der Arretierung mit dem Haftmagneten und dem diesem gegenüberstehenden ferromagnetischen, fest an dem Gehäuse angeordneten Arretierungselement kann die Höhenverstellung einfach und sinnfällig manuell direkt durch Handhabung der Auslaufeinheit erfolgen, denn der Haftmagnet bewirkt in Verbindung mit dem gegenüberstehenden ferromagnetischen Arretierungselement ständig genügend Haftreibung, um die Auslaufeinheit ohne weiteres in jeder eingestellten Höhe zu arretieren. Dies gilt auch bei Fertigungstoleranzen, weil der Haftmagnet begrenzt horizontal verschiebbar angeordnet ist, womit ein Toleranzausgleich erzielt wird. Andererseits ist die manuelle Verstellbarkeit der Auslaufeinheit deswegen bei geeigneter Magnetfeldstärke des Haftmagneten, der ständig an dem ferromagnetischen Arretierungselement anliegt, gewährleistet. - Bei Ausbildung der Arretierung und der Höhenverstellung mit einem Antriebsmotor und Getriebeverbindung zu dem Aufnahmechassis kann die Höhenverstellung noch bequemer durch Betätigung eines Auf-Ab-Schalters nach Anspruch 12 bzw. eines Startschalters für Kaffee nach Anspruch 19 erfolgen.

Durch den Auf-Ab-Schalter gemäß Anspruch 12 wird in Verbindung mit den Endschaltern gemäß Anspruch 13 die Richtung gesteuert, in der die Auslaufeinheit verstellt wird, bis der Antriebsmotor durch Umschalten des Auf-Ab-Schalters oder automatisch bei Erreichen der aktuellen Tassenhöhe abgeschaltet wird. Dies wird weiter unten im einzelnen erläutert.

Die Endschalter können als Kopfkontakt oder Fußkontakt in der Bewegungsbahn des Aufnahmechassis nach Anspruch 14 angeordnet sein, um zu bewirken, daß der Antriebsmotor in dem richtigen Drehsinne zur Höhenverstellung der Auslaufeinheit anläuft, um die Auslaufeinheit aus der jeweiligen Endstellung herauszufahren.

Statt der Endschalter kann ein Weg-Encoder vorgesehen sein, der gemäß Anspruch 15 mit dem Antriebsmotor gekoppelt ist und erfaßt, ob die obere Endstellung oder die untere Endstellung der Auslaufeinheit erreicht ist. Der Encoder kann auch die Richtung steuern, in der die Auslaufeinheit jeweils aus einer der beiden Endstellungen herausfährt, bis die Auslaufeinheit insbesondere bei Erreichen der jeweiligen Tassenhöhe gestoppt wird.

Besonders bedienungsfreundlich, da keine Aufmerksamkeit der Bedienungsperson zum Stoppen der Auslaufeinheit bei Erreichen der jeweiligen Tassenhöhe beanspruchend, kann der Kaffeeautomat gemäß Anspruch 16 mit einer Sensoreinheit an der Auslaufeinheit ausgerüstet sein, mit der die Höhe einer unter dem Auslaufrohr aufgestellten Tasse erfaßt wird und der Antriebsmotor, der die Auslaufeinheit insbesondere aus einer oberen Endposition fährt, selbsttätig abgeschaltet wird, sobald die Sensoranordnung die Höhe der Tasse erfaßt.

Die Sensoranordnung kann nach den Ansprüchen 17 und 18 alternativ als Lichtschrankenanordnung oder auch als Laserannäherungs- oder Reflexanordnung ausgeführt sein.

Zum selbsttätigen Abschalten der Höhenverstellung der Auslaufeinheit mittels der Sensoreinheit ist die Schaltungsanordnung gemäß Anspruch 19 vorgesehen. Sie umfaßt ein Relais, das mit einem Startschalter einschaltbar ist. Der Startschalter kann insbesondere der das Aufbrühen des Kaffees initiierende Schalter sein. Von dem Relais werden Umschaltkontakte betätigt, die in dem Stromlauf des Antriebsmotor angeordnet sind, in den auch die Endkontakte sowie ein Lichtschrankenkontakt bzw. Laserschrankenkontakt angeordnet sind, und zwar derart, daß durch Betätigung des Startschalters die Auslaufeinheit von einer oberen Endstellung bis auf die Tassenhöhe herunterfährt, bei Erfassung der Tassenhöhe durch die entsprechende Sensoranordnung stoppt, weil damit der Lichtschrankenkontakt bzw. Laserschrankenkontakt betätigt wird, insbesondere geöffnet wird, und nach Beendigung des Brühvorgangs oder Entnahme der Tasse durch Öffnen des Startschalters in die obere Endstellung zurückfährt, insbesondere weil der Stromfluß über die als Wechselkontakte ausgebildeten Relaiskontakte und den Kopfkontakt bzw. entsprechenden Endschalter umgekehrt ist. - Es sei bemerkt, daß bei Öffnen des Startschalters zum Zurückstellen der Auslaufeinheit gleichzeitig eine Brühwasserpumpe des Kaffeeautomaten abgeschaltet wird, um zu vermeiden, daß die Kaffeezubereitung unkontrolliert aus der Auslaufeinheit ausströmt.

Zweckmäßig ist die Schaltungsanordnung, in der der Antriebsmotor angeordnet ist, gemäß Anspruch 20 mit einem weiteren Sensor bzw. von diesem gesteuerten Sensorkontakt erweitert, der ein Vorhandensein einer unter dem Auslaufrohr aufgestellten Tasse erfaßt bzw. kontrolliert, so daß Fehlbedienungen der Höhenverstellung ausgeschlossen sind. Dieser Sensorkontakt ist insbesondere in Reihe zu dem Startschalter und dem Relais angeordnet. Der Sensorschalter bewirkt, wenn unter dem Auslaufrohr keine Tasse aufgestellt ist, daß der Stromlauf des Antriebsmotors nicht geschlossen wird und dieser in seiner Endstellung verbleibt. Außerdem kann er einen Brühvorgang unterbinden.

Vier Ausführungsformen der Erfindung werden im folgenden anhand einer Zeichnung mit zehn Figuren erläutert, woraus sich weitere Einzelheiten der Erfindung und Klarstellungen ergeben können. Es zeigen:
- Figur 1: einen senkrechten Schnitt durch eine erste Ausführungsform eines Kaffeeautomaten, nämlich mit einer direkt manuell höhenverstellbaren Auslaufeinheit mit Haftmagnet,
- Figur 2: eine Frontansicht auf die erste Ausführungsform gemäß Figur 1,
- Figur 3: einen senkrechten Schnitt durch eine zweite Ausführungsform des Kaffeeautomaten mit manuell kontrollierter motorisch höhenverstellbarer Auslaufeinheit,
- Figur 4: eine Frontansicht auf die zweite Ausführungsform gemäß Figur 3,
- Figur 5: einen senkrechten Schnitt durch eine dritte Ausführungsform einer automatisch motorisch höhenverstellbaren Auslaufeinheit mit einer in die Höhenverstellung eingreifenden Sensoranordnung,
- Figur 6: eine Frontansicht auf die dritte Ausführungsform gemäß Figur 5,
- Figur 7: einen senkrechten Schnitt durch eine vierte Ausführungsform der Auslaufeinheit als Variante der dritten Ausführungsform mit einer alternativen Sensoranordnung, die in die Höhenverstellung eingreift,
- Figur 8: eine Frontansicht auf die vierte Ausführungsform gemäß Figur 7,
- Figur 9: eine Prinzipschaltungsanordnung der zweiten Ausführungsform und
- Figur 10: eine Prinzipschaltungsanordnung der dritten oder vierten Ausführungsform.

In sämtlichen Figuren sind übereinstimmende Teile der diversen Ausführungsformen mit den gleichen Bezugszeichen versehen.

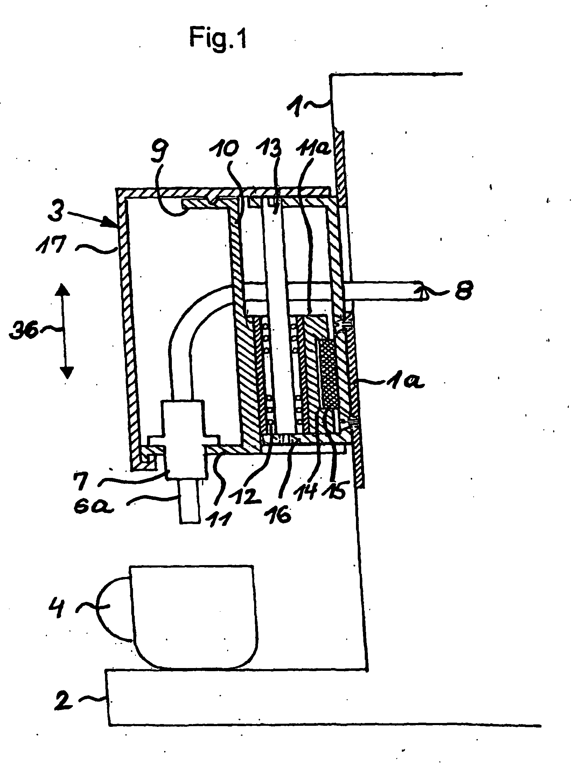

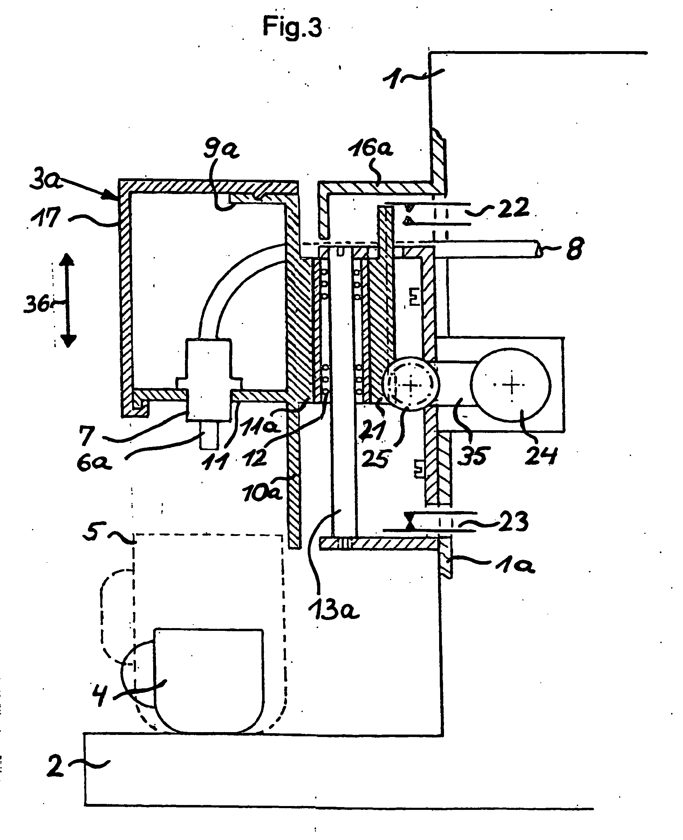

In den Figuren 1 bis 9 ist mit 1 ein Gehäuse einer Espressomaschine mit einem Fußteil 2 bezeichnet, auf dem unterhalb einer Auslaufeinheit 3 Tassen unterschiedlicher Größe, z.B. eine kleine Tasse 4 oder eine große Tasse 5, abgestellt werden können. In den Figuren 3 bis 8 ist die größere Tasse mit unterbrochenen Linien dargestellt. Die Tassen werden auf dem Fußteil 2 so aufgestellt, daß sie gebrühten Kaffee aus Kaffeeauslaufrohren 6, 6a an einem Kaffeeauslaufverteiler vollständig aufnehmen. Die Menge gebrühten Kaffees, welche die Kaffeeauslaufrohre 6, 6a verläßt, kann durch nicht dargestellte Mittel eingestellt werden. - Die Kaffeeauslaufrohre 6, 6a und der Kaffeeauslaufverteiler 7 gehören zu der Auslaufeinheit 3, durch die eine flexible Kaffeezulauf-Leitung 8 zu dem Auslaufverteiler 7 von einer nicht dargestellten Brüheinheit in dem Gehäuse 1 führt. Zu der Brüheinheit gehört eine ebenfalls nicht dargestellte Brühwasserpumpe, die zum Aufbrühen des Kaffees eingeschaltet wird. Zum Einschalten dient der Startschalter 19 für Kaffee.

Die den Auslaufverteiler 7 mit den Kaffeeauslaufrohren 6, 6a tragende Struktur der Auslaufeinheit 3 ist ein Aufnahmechassis 9 mit einer vertikalen Wand 10, von deren erster Seite ein waagerechter Wandabschnitt 11 vorkragt, welcher den Auslaufverteiler 7 mit den Kaffeeauslaufrohren 6, 6a trägt. Auf der der ersten Seite der vertikalen Wand 10 abgewandten Seite ist aus der Wand ein Vorsprung 11a ausgeformt, der somit dem Gehäuse 1 der Espressomaschine zugewandt ist. In einer Bohrung des Vorsprungs 11a ist ein höhenverschiebbares Längskugellager 1 2 untergebracht. Das Längskugellager 12 schließt eine ortsfeste Längskugellagerachse 1 3 ein, der entlang es leichtgängig verschiebbar ist.

Auf der dem Gehäuse 1 zugewandten Seite des Vorsprungs 11a ist in der ersten Ausführungsform gemäß Figur 1 in einer offenen Ausnehmung 14 ein Haftmagnet 15 eingelassen, und zwar so, daß der Haftmagnet 15 in der Ausnehmung begrenzt horizontal verschiebbar ist, um einen Toleranzausgleich zu ermöglichen, damit der Haftmagnet 15 unabhängig von seiner Höheneinstellung sicher an einem Gegenstück aus ferromagnetischem Material anhaften kann und die Auslaufeinheit somit arretieren kann.

Als Gegenstück dient ein Träger 16 aus ferromagnetischem Material, der mit dem Gehäuse 1 fest verbunden ist, indem er z.B. an einer Gegenplatte 1a hinter einer Wand des Gehäuses 1 angeschraubt ist. Der Träger 16 dient somit in Verbindung mit dem Haftmagneten 15 als Arretierüngselement.

Zwischen nicht bezeichneten Schenkeln des im senkrechten Schnitt annähernd C-förmigen Trägers ist die Längskugellagerachse 13 ortsfest angebracht.

Aus Figur 1 ist ersichtlich, daß das Gehäuse 1 der Espressomaschine und die Gegenplatte 1a einen Schlitz aufweisen, durch den die flexible Kaffeezulaufleitung 8 von der Brüheinheit bzw. dem Brühkopf in dem Gehäuse 1 zu dem Kaffeeauslaufverteiler 7 geführt ist.

Die Konstruktionseinheit des Trägers 16 und des Aufnahmechassis 9 ist durch eine Abdeckkappe 17 glattflächig verschlossen.

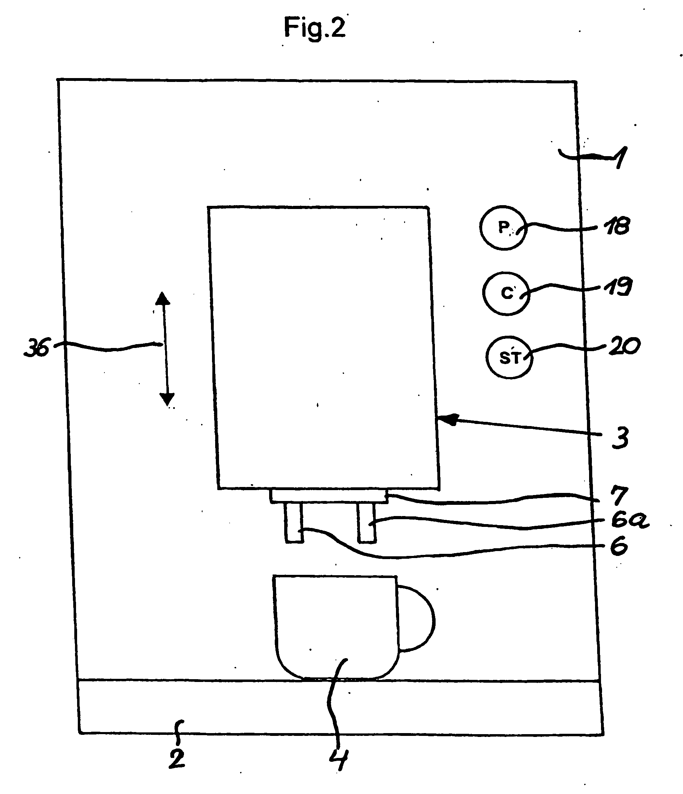

Figur 2 zeigt drei Bedienknöpfe der Espressomaschine, nämlich einen Netzschalter 18, einen Startschalter für Kaffee 19 und eine Starttaste 20 für Dampf.

Nach Aufstellen der Tasse 4 auf dem Fußteil 2 wird vor einem Kaffeebrühvorgang die Auslaufeinheit 3 manuell auf eine Höhe eingestellt, daß aus den Kaffeeauslaufrohren 6, 6a nach Betätigung des Startschalters 19 für Kaffee auslaufender Kaffees von der Tasse 4 vollständig und sicher aufgenommen wird. Mit dem in den Figuren 1 bis 8 dargestellten Doppelpfeil 36 ist die Höhenverstellbarkeit der Auslaufeinheit in beiden Richtungen angedeutet. In der in Figur 1 dargestellten Stellung der Auslaufeinheit 3 nimmt diese ihre tiefste Position ein, in der ein oberer waagerechter Abschnitt der Abdeckkappe 17 auf dem Träger 16 zur Anlage gelangt. Aus dieser Stellung kann die Auslaufeinheit 3 unter Überwindung der Haftkraft des Haftmagneten 15 ohne weiteres nach oben verschoben werden, wobei nach Loslassen der Auslaufeinheit der Haftmagnet 15 die Auslaufeinheit sicher in der eingestellten Position hält.

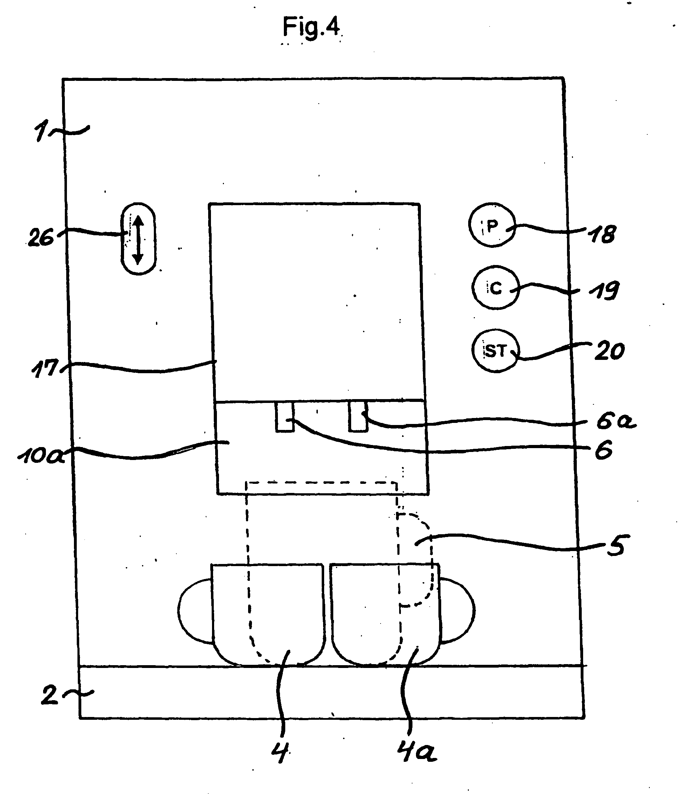

Die zweite Ausführungsform gemäß den Figuren 3 und 4 mit der Auslaufeinheit 3a unterscheidet sich von der obigen ersten Ausführungsform gemäß den Figuren 1 und 2 im wesentlichen durch folgendes:

Auf der dem Gehäuse 1 der Espressomaschine zugewandten Seite der vertikalen Wand 10a eines Aufnahmechassis 9a steht mit einem Vorsprung 11 a der Wand eine Zahnstange 21 in fester Verbindung. Die Zahnstange 21 dient als Element zur Höhenverstellung und Verriegelung. Zur leichtgängigen verschleißarmen Höhenverstellung ist in dem Vorsprung 11a das Längskugellager angeordnet, das somit in fester Verbindung zu dem Aufnahmechassis 9a steht. Es umgreift eine Längskugellagerachse 13a zur leichtgängigen und verschleißarmen Höhenverstellung. Die vertikale Längskugellagerachse 13a ist an einem Träger 16a fixiert, der seinerseits an dem Gehäuse 1 der Espressomaschine bzw. einer Gegenplatte 1 a angeschraubt ist.

An den beidseitigen Enden der Bewegungsbahn der Zahnstange sind zwei Endschalter, nämlich ein Kopfkontakt 22 und ein Fußkontakt 23 angeordnet. Diese sind als Öffner ausgebildet, d.h. normalerweise geschlossen, jedoch geöffnet, wenn sich die Zahnstange in ihrer jeweiligen Endstellung befindet, wie z.B. in Figur 3 bei dem Kopfkontakt 22 dargestellt.

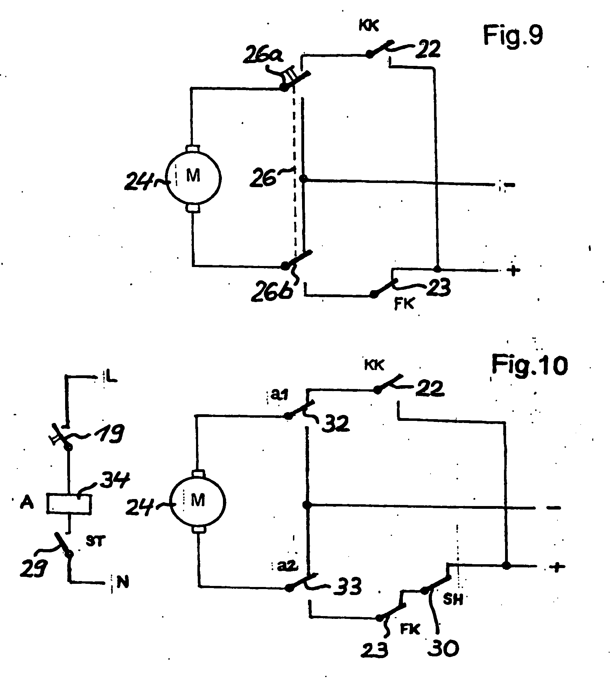

Zur Höhenverstellung dient ein in dem Gehäuse 1 untergebrachter Antriebsmotor 24, der über ein Getriebe 35 und ein Antriebsritzel 25 mit der Zahnstange 21 in Verbindung steht, in die das Antriebsritzel 25 eingreift. Die Ansteuerung des Antriebsmotors 24 erfolgt in dem Ausführungsbeispiel gemäß den Figuren 3 und 4 mittels eines Auf-Ab-Schalters 26, der als zweipoliger Umschalter ausgeführt ist, wie in der zugehörigen Schaltungsanordnung in Figur 9 dargestellt. Aus dieser Schaltungsanordnung geht auch die Einfügung des Kopfkontakts 22 und des Fußkontakts 23 hervor.

In der in den Figuren 3 und 9 dargestellten Situation befindet sich die Auslaufeinheit 3a in ihrer oberen Position, in welcher die Zahnstange 21 den Kopfkontakt 22 öffnet, während der Fußkontakt 23 geschlossen ist. In der in Figur 9 dargestellten Schaltstellung des Auf-Ab-Schalters 26 ist der Antriebsmotor 24 spannungslos. Wenn der Auf-Ab-Schalter 26 aus dieser Schaltstellung betätigt wird, fließt ein Strom über den Fußkontakt 23, einen Kontakt 26b des Auf-Ab-Schalters 26, den Motor 24 und einen zweiten Kontakt 26a des Auf-Ab-Schalters 26. Demzufolge bewegt der Antriebsmotor 24 über das Getriebe 35 und das Ritzel 25 die Zahnstange und mit dieser die gesamte Auslaufeinheit 3a nach unten zu einer untergestellten großen Tasse 5 oder kleinen Tasse 4, bis die Bedienungsperson den Auf-Ab-Schalter 26 wieder in die in Figur 9 dargestellte Position zurückschaltet, wodurch der Stromfluß über den Motor 24 unterbrochen wird. Unterbleibt eine solche Umschaltung während des Absenkens der Auslaufeinheit 3a, so wird der Antriebsmotor 24 abgeschaltet, wenn die Zahnstange 21 ihre untere Endposition erreicht und den Fußkontakt 23 öffnet. Der Kopfkontakt 22 ist bereits geschlossen, sobald die Oberseite der Zahnstange 21 den Kopfkontakt verlassen hat, womit die Schaltungsanordnung bereit ist, bei einer erneuten Betätigung des Auf-Ab-Schalters, wenn dieser in die in Figur 9 dargestellte Position gelangt, den Antriebsmotor 24 so mit Strom zu beaufschlagen, daß sich die Auslaufeinheit 3a nach oben bis in ihre obere Endlage zurückbewegt. (Die obere Endlage wird nur dann nicht erreicht, wenn der Auf-Ab-Schalter 26 zuvor erneut betätigt wird, wodurch dessen Bewegung gestoppt wird.)

Bei stromlosem Antriebsmotor 24 erfolgt selbsttätig eine Arretierung der Auslaufeinheit 3a, da die Anordnung Motor, Getriebe, Ritzel, Zahnstange selbsthemmend ist.

Die zweite Ausführungsform gemäß den Figuren 3, 4 und 9 ist also geeignet, die Höhenverstellung der Auslaufeinheit 3a zu erleichtern, indem diese nur eine Betätigung des Auf-Ab-Schalters und Beobachtung der Höhenverstellung im Blick auf die untergestellte Tasse erfordert.

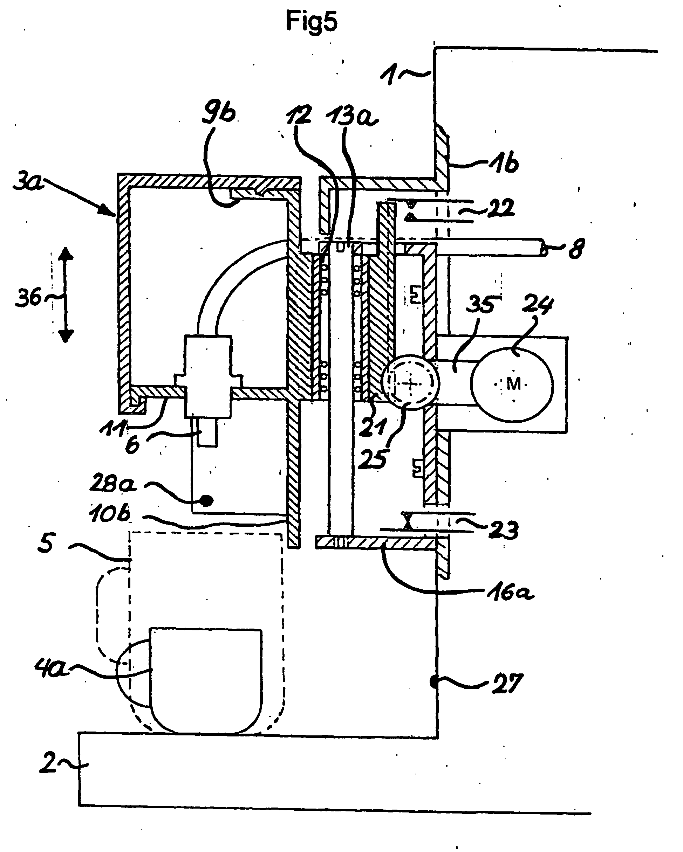

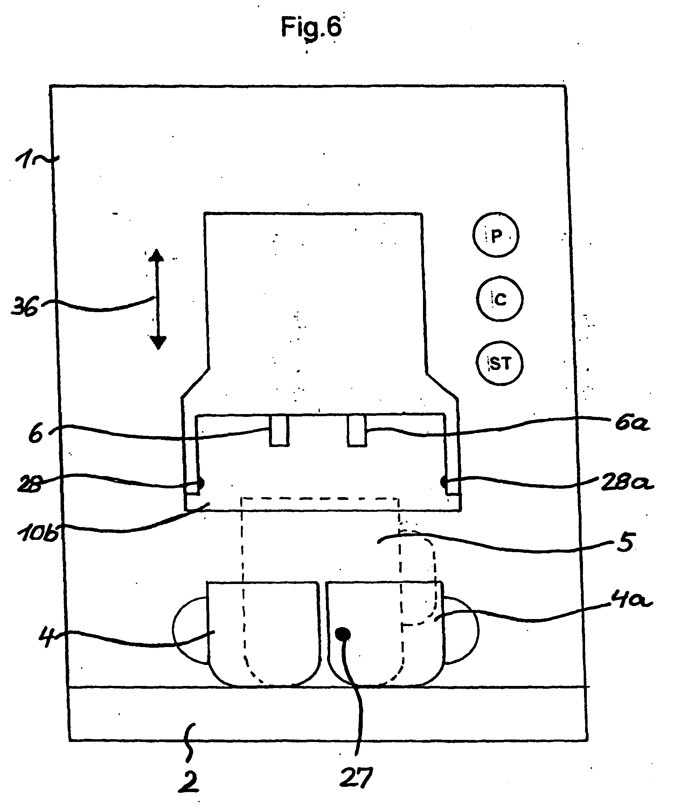

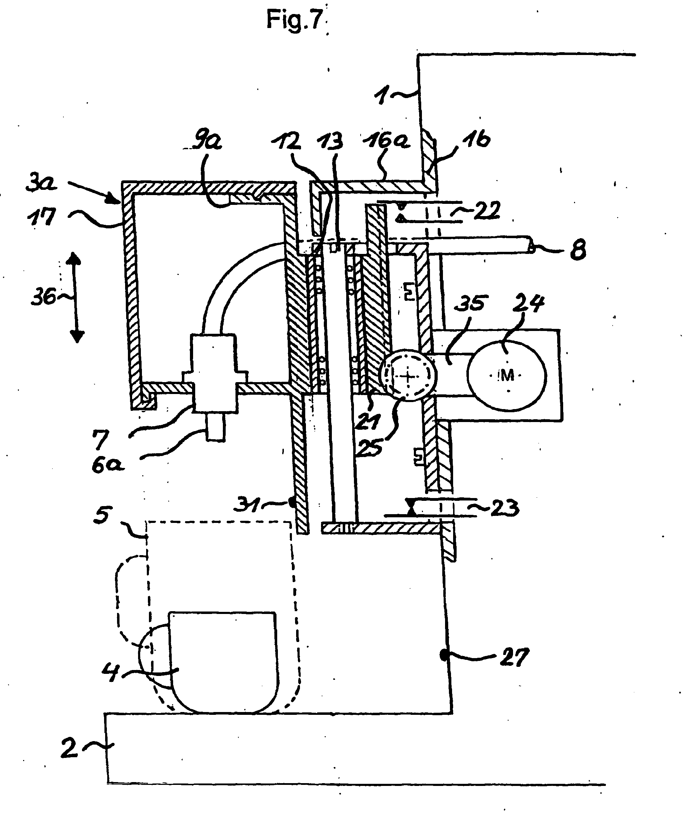

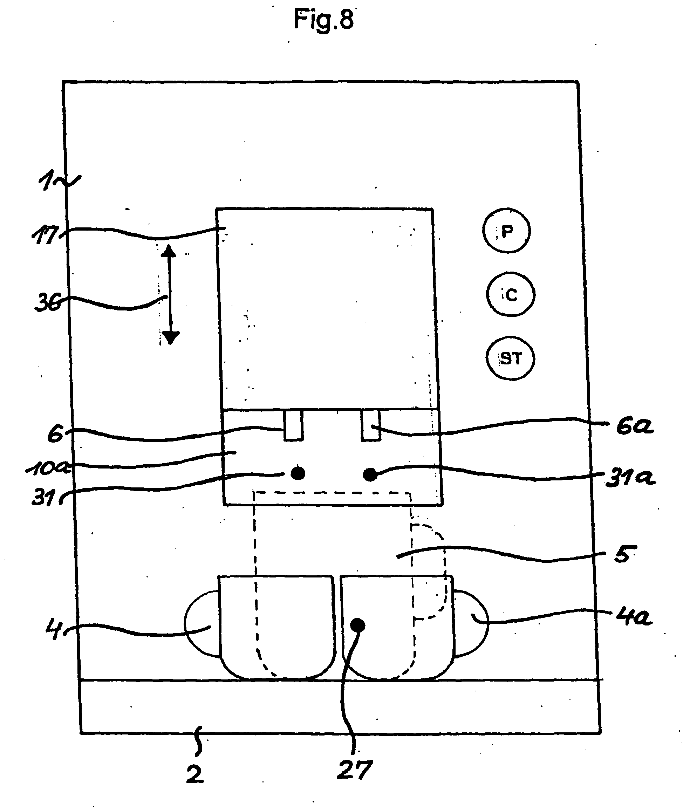

Ein höherer Automatisierungsgrad der Höhenverstellung wird mit den Ausführungsformen gemäß den Figuren 5 bis 8 und 10 erreicht. Sowohl mit der dritten Ausführungsform gemäß den Figuren 5 und 6 als auch mit der vierten Ausführungsform gemäß den Figuren 7 und 8 erfolgt die Höhenverstellung und danach Verriegelung selbsttätig nach Betätigung des Startschalters 19 für Kaffee, wenn auf dem Fußteil 2 eine Tasse 4 bzw. 5 abgestellt ist:

Hierzu weist die dritte Ausführungsform gemäß Figur 5 im Wirkungsbereich der Tasse 4 bzw. 5 in dem Gehäuse 1 der Espressomaschine einen ersten, ortsfesten Sensor 27 sowie an der Auslaufeinheit 3a eine mit dieser verstellbare Lichtschranke mit Lichtschrankenelementen 28, 28a auf. Letztere sind so an einem unteren Abschnitt der Auslaufeinheit 3a angeordnet, daß ein zwischen ihnen verlaufendes Strahlenbündel durch den oberen Rand der Tasse 4 bzw. 5 unterbrochen wird. Ein zu dem Tassensensor 27 gehörender Sensorkontakt ist in Figur 10 mit 29 bezeichnet und ein zu der Lichtschranke 28, 28a gehörender Lichtschrankenkontakt mit 30.

Es sei bereits hier bemerkt, daß sich die vierte Ausführungsform von der dritten Ausführungsform dadurch unterscheidet, daß die vierte Ausführungsform gemäß den Figuren 7 und 8 eine Laserannäherungs- oder Reflexanordnung mit Lasersensoren 31, 31 a statt der Lichtschranke 28, 28a aufweist, um eine Tassengröße unter jeweils einem der Kaffeeauslaufrohre 6, 6a zu erfassen. Demzufolge kann in Figur 10 der Lichtschrankenkontakt 30 auch als Lasersensorkontakt angesehen werden.

Im übrigen weisen die dritte Ausführungsform und die vierte Ausführungsform den Kopfkontakt 22 und den Fußkontakt 23 wie die zweite Ausführungsform auf.

In der Schaltungsanordnung gemäß Figur 10 für die dritte und vierte Ausführungsform sind quasi die Umschaltkontakte 26a, 26b des Auf-Ab-Schalters 26 der Figur 9 durch Relais-Umschaltkontakte 32, 33 ersetzt, die durch ein Relais 34 betätigt werden. Im Stromlauf des Antriebsmotors 24 ist in Reihe zu dem Fußkontakt 23 noch der Lichtschrankenkontakt oder Lasersensorkontakt 30 angeordnet.

Das Relais 34, d.h. dessen Spule, liegt in Reihe zu dem Startschalter 19 für Kaffee, der manuell zu betätigen ist, sowie zu dem Sensorkontakt 29, welcher dem Tassensensor 27 zugeordnet ist, mit dem die Anwesenheit einer Tasse auf dem Fußteil 2 erfaßt wird.

Die Höhenverstellung der dritten Ausführungsform und der vierten Ausführungsform erfolgt gleichermaßen wie folgt:

Es sei wiederum angenommen, daß ursprünglich die Auslaufeinheit 3a sich in ihrer oberen Endlage befindet, in der der Kopfkontakt 22 offen ist und der Fußkontakt 23 geschlossen, vgl. Figuren 5, 7 und 10. Nach Betätigung des Netzschalters 18 ist die Espressomaschine betriebsbereit. Mit dem Tassensensor wird erfaßt, ob unter die Auslaufeinheit 3a eine Tasse auf dem Fußteil 2 aufgestellt ist, wodurch der Sensorkontakt 29 in Figur 10 gegebenenfalls geschlossen wird. Wenn nun der Schalter 19 für den Kaffeebrühvorgang betätigt wird, schließt dies den Stromkreis des Relais 34 und die Relaisumschaltkontakte 32, 33 schließen einen Stromkreis über die Kontakte 23 und 30, so daß der Motor 24 die Auslaufeinheit 3a abwärts bewegt, und zwar so lange, bis die Lichtschranke 28, 28a in den Figuren 5 und 6 durch die Tasse unterbrochen wird bzw. die Tassenhöhe durch einen der Lasersensoren 31, 31 a in den Figuren 7 und 8 erfaßt wird. Sobald letzteres geschieht, öffnet der Lichtschrankenkontakt oder Lasersensorkontakt 30, der als Öffner ausgebildet ist, und der Antriebsmotor 24 stoppt, was über die Getriebemittel 35, das Antriebsritzel 36 und die Zahnstange 21 die Auslaufeinheit 3a arretiert. - Die automatische Höhenverstellung wird durch Betätigung der Starttaste 19 nur dann gestartet, wenn der Tassensensor 27 eine Tasse ortet und den Sensorkontakt 29 schließt. Dabei kann sich die Tasse 4 bzw. 5 bereits unter der Auslaufeinheit 3a befinden oder erst nach Betätigung des Startschalters 1 9 unter die Auslaufeinheit 3a gestellt werden.

Nach Beendigung des Brühvorgangs wird der Brühschalter 1 9 erneut betätigt, wodurch gleichzeitig die Brühwasserpumpe abgeschaltet wird, so daß kein gebrühter Kaffee mehr aus den Kaffeeauslaufrohren 6, 6a austreten kann. Durch Öffnen des Startschalters 19 für Kaffee werden die Relaiskontakte 32, 33 in die in Figur 10 gezeigte Stellung umgeschaltet und der Motor 24 wird über den geschlossenen Kopfkontakt 22 mit Strom beaufschlagt, so daß der Motor 24 die Auslaufeinheit 3a nach oben bewegt, bis in der oberen Endstellung der Auslaufeinheit 3a der Kopfkontakt 22 geöffnet wird und der Motor stoppt, somit die Auslaufeinheit 3a arretiert. - Eine Abwärtsbewegung der Auslaufeinheit 3a wird zusätzlich zu und unabhängig von der Erfassung der Tassenhöhe durch den Fußkontakt 23 begrenzt. Aus obigem ergibt sich, daß der Kopfkontakt 22 und der Fußkontakt 23 jeweils die Umsteuerung des Antriebsmotors 24 vorbereiten, die entweder gemäß Figur 9 über die Kontakte 26 des Auf-Ab-Schalters erfolgt oder gemäß Figur 10 durch die Relaiskontakte 32 und 33 des Relais 34.

### Bezugszeichenliste

- 1: Gehäuse einer Espressomaschine
- 1 a: Gegenplatte
- 1 b: Gegenplatte
- 2: Fußteil
- 3: Auslaufeinheit
- 3a: Auslaufeinheit
- 4: Tasse klein
- 4a: Tasse klein
- 5: Tasse groß
- 6: Kaffeeauslaufrohr
- 6a: Kaffeeauslaufrohr
- 7: Kaffeeauslaufverteiler
- 8: Kaffeezulaufleitung
- 9: Aufnahmechassis
- 9a: Aufnahmechassis
- 9b: Aufnahmechassis
- 10: vertikale Wand
- 10a: vertikale Wand
- 10b: vertikale Wand
- 11: waagerechter Wandabschnitt
- 11a: Vorsprung
- 12: Längskugellager
- 13: Längskugellagerachse
- 13a: Längskugellagerachse
- 14: Ausnehmung
- 15: Haftmagnet
- 16: Träger
- 16a: Träger
- 17: Abdeckkappe
- 18: Netzschalter
- 19: Startschalter für Kaffee
- 20: Starttaste für Dampf
- 21: Zahnstange
- 22: Kopfkontakt
- 23: Fußkontakt
- 24: Antriebsmotor
- 25: Ritzel
- 26: Auf-Ab-Schalter
- 26a: Auf-Ab-Schalter-Kontakt
- 26b: Auf-Ab-Schalter-Kontakt
- 27: Tassensensor
- 28: Lichtschrankenelement für Tassengröße
- 28a: Lichtschrankenelement für Tassengröße
- 29: Sensorkontakt
- 30: Lichtschrankenkontakt bzw. Lasersensorkontakt
- 31: Lasersensor
- 31 a: Lasersensor
- 32: Relaiskontakt
- 33: Relaiskontakt
- 34: Relais
- 35: Getriebe
- 36: Doppelpfeil

## Patentansprüche

1. Kaffeeautomat mit einer höhenverstellbaren und arretierbaren Auslaufeinheit (3, 3a), die mindestens ein mit einer Kaffeebrüheinrichtung in fluidleitender Verbindung stehendes Kaffeeauslaufrohr (6, 6a) aufweist, gegenüber einer Tassenauflage stufenlos höhenverstellbar ist und mit einer Arretierung arretierbar ist,
**dadurch gekennzeichnet,**
**daß** die Auslaufeinheit (3, 3a) mittels eines Längskugellagers (12), als erstes Lagerelement, welches eine vertikale Längskugellagerachse (13, 13a) als zweites Lagerelement umgreift, an dem Gehäuse (1) gelagert ist, wobei eines der beiden Lagerelemente mit der Auslaufeinheit (3, 3a) verbunden ist und das andere der beiden Lagerelemente mit einem Gehäuse (1) des Kaffeeautomaten in fester Verbindung steht.

2. Kaffeeautomat nach Anspruch 1,
**dadurch gekennzeichnet,**
**daß** die Längskugellagerachse (13, 13a) vertikal an einem Träger (16, 16a) angebracht ist, der mit dem Gehäuse (1) des Kaffeeautomaten fest verbunden ist, und daß die Auslaufeinheit (3, 3a) ein Aufnahmechassis (9, 9a, 9b) aufweist, welches das Längskugellager (12) in fester Verbindung aufnimmt.

3. Kaffeeautomat nach Anspruch 1,
**dadurch gekennzeichnet,**
**daß** die Längskugellagerachse (13, 13a) vertikal an einem Aufnahmechassis (9, 9a, 9b) der Auslaufeinheit (3, 3a) angebracht ist und daß das Längskugellager mit einem Träger (16, 16a) an dem Gehäuse (1) in fester Verbindung steht.

4. Kaffeeautomat nach Anspruch 2,
**dadurch gekennzeichnet,**
**daß** das Aufnahmechassis (9, 9a, 9b) eine vertikale Wand (10, 10a) aufweist, auf deren erster Seite das Kaffeeauslaufrohr (6, 6a) und ein mit diesem verbundener Abschnitt einer Kaffeezulaufleitung (8) angeordnet sind und auf deren zweiter Seite das Längskugellager (1 2) sitzt und die Arretierung angeordnet ist.

5. Kaffeeautomat nach Anspruch 4,
**dadurch gekennzeichnet,**
**daß** von der ersten Seite des Aufnahmechassis (9, 9a, 9b) ein waagerechter Wandabschnitt (11) vorkragt, welcher das Kaffeeauslaufrohr (6, 6a) trägt.

6. Kaffeeautomat nach wenigstens einem der Ansprüche 4 und 5,
**dadurch gekennzeichnet,**
**daß** von der zweiten Seite des Aufnahmechassis (9, 9a, 9b) ein Vorsprung (11, 1 1a) hervorsteht, in welchem das Längskugellager untergebracht ist und an dem die Arretierung angreift.

7. Kaffeeautomat nach wenigstens einem der vorangehenden Ansprüche,
**dadurch gekennzeichnet,**
**daß** das Aufnahmechassis (9, 9a, 9b) durch eine Kappe (17) im wesentlichen mit Ausnahme der dem Gehäuse (1) des Kaffeeautomaten bzw. dem Träger zugewandten Seite abgedeckt ist.

8. Kaffeeautomat nach wenigstens einem der vorangehenden Ansprüche,
**dadurch gekennzeichnet,**
**daß** die Arretierung wenigstens zwei Arretierungselemente umfaßt, von denen ein erstes Arretierungselement mit der Auslaufeinheit (3, 3a) in Verbindung steht und das zweite Arretierungselement an einem Gehäuse (1) des Kaffeeautomaten angebracht ist, daß das eine der beiden Arretierungselemente einen Haftmagneten (15) umfaßt und daß das andere der beiden Arretierungselemente (16) ferromagnetisch ist.

9. Kaffeeautomat nach Anspruch 8,
**dadurch gekennzeichnet,**
**daß** der Haftmagnet (15) in einer Ausnehmung (14) des Aufnahmechassis (9) horizontal begrenzt verschiebbar angeordnet ist und daß das ferromagnetische, an dem Gehäuse angebrachte Arretierungselement (16) im wesentlichen dem Haftmagneten (15) gegenübersteht.

10. Kaffeeautomat nach wenigstens einem der Ansprüche 1 bis 7,
**dadurch gekennzeichnet,**
**daß** an dem Aufnahmechassis (9a, 9b) eine vertikale Zahnstange (21) angebracht ist, die mit einem in dem Gehäuse (1) des Kaffeeautomaten angeordneten Antriebsmotor (24) in Getriebeverbindung (35) steht, und daß die Getriebeverbindung (35) mit dem Antriebsmotor (24) selbsthemmend ist.

11. Kaffeeautomat nach Anspruch 10,
**dadurch gekennzeichnet,**
**daß** ein mit dem Antriebsmotor (24) in Verbindung stehendes Antriebsritzel (36) in die Zahnstange (21) eingreift.

12. Kaffeeautomat nach wenigstens einem der Ansprüche 10 und 11,
**dadurch gekennzeichnet,**
**daß** in einer elektrischen Schaltungsanordnung des Antriebsmotors ein Auf-Ab-Schalter (26) angeordnet ist, mit dem eine Höhenverstellung der Auslaufeinheit (3a) aufwärts oder abwärts steuerbar ist.

13. Kaffeeautomat nach wenigstens einem der Ansprüche 1 bis 12,
**dadurch gekennzeichnet,**
**daß** in der Schaltungsanordnung Endschalter angeordnet sind, mit denen der Antriebsmotor (24) in einer oberen Endstellung der Auslaufeinheit (3a) und in einer unteren Endstellung der Auslaufeinheit (3a) abschaltbar ist und eine Umsteuerung der Drehrichtung des Antriebsmotors (24) mit Erreichen einer der Endstellungen vorbereitbar ist.

14. Kaffeeautomat nach Anspruch 13,
**dadurch gekennzeichnet,**
**daß** die Endschalter als Kopfkontakt (22) und als Fußkontakt (23) in der Bewegungsbahn des Aufnahmechassis (9a, 9b) angebracht sind.

15. Kaffeeautomat nach einem der Ansprüche 1 bis 12,
**dadurch gekennzeichnet,**
**daß** ein Weg-Encoder mit dem Antriebsmotor gekoppelt ist, der geeignet ist, eine obere Endstellung und eine untere Endstellung der Auslaufeinheit (3a) zu erfassen und eine Umsteuerung der Drehrichtung des Antriebsmotors (24) mit Erreichen einer der Endstellungen vorbereitbar ist.

16. Kaffeeautomat nach wenigstens einem der vorangehenden Ansprüche,
**dadurch gekennzeichnet,**
**daß** an der Auslaufeinheit (3a) eine Sensoranordnung angebracht ist, die geeignet ist, eine Höhe einer unter dem Auslaufrohr aufgestellten Tasse (4, 5) zu erfassen und die so in der Schaltungsanordnung des Antriebsmotors (24) angeordnet ist, daß sie diesen abschaltet, wenn bei einer Bewegung der Auslaufeinheit (3a) nach unten die Höhe der Tasse erfaßt ist.

17. Kaffeeautomat nach Anspruch 16,
**gekennzeichnet durch**
eine Lichtschrankenanordnung (28, 28a) als Sensoranordnung.

18. Kaffeeautomat nach Anspruch 16,
**gekennzeichnet durch**
eine Laserannährungs- oder Reflexanordnung (31, 31a) als Sensoranordnung.

19. Kaffeeautomat nach einem der Ansprüche 13 bis 18,
**dadurch gekennzeichnet,**
**daß** die Schaltungsanordnung des Antriebsmotors ein Relais (34) mit einem Startschalter (19) umfaßt und daß in dem Stromlauf des Antriebsmotors (24) von dem Relais (34) betätigte Umschaltkontakte (32, 33). Endkontakte (22, 23) sowie ein Lichtschrankenkontakt bzw. Lasersensorkontakt (30) angeordnet sind, derart, daß durch Betätigung des Startschalters (19) und damit Anziehen des Relais (34) die Auslaufeinheit (3a) von einer oberen Endstellung bis auf die Tassenhöhe herunterfährt, bei Erfassung der Tassenhöhe durch die Sensoranordnung (28, 28a; 31, 31a) und damit Betätigen des Lichtschrankenkontakts bzw. Lasersensorkontakts (30) stoppt und nach Beendigung des Brühvorgangs oder Entnahme der Tasse (4, 5) durch Öffnen des Startschalters (19) in die obere Endstellung zurückfährt.

20. Kaffeeautomat nach Anspruch 19,
**dadurch gekennzeichnet,**
**daß** die Schaltungsanordnung in Reihe zu dem Startschalter (19) einen zusätzlichen, von einem Sensor (27), der ein Vorhandensein einer unter dem Auslaufrohr (6, 6a) aufgestellten Tasse (4, 5) erfaßt, gesteuerten Sensorkontakt (29) aufweist.

## Claims

1. Automated coffee machine with height-adjustable and arrestable outlet unit (3, 3a) which comprises at least one coffee outlet pipe (6, 6a) in fluid-conducting connection with a coffee brewing device, is height-adjustable relative to a cup tray and is arrestable by an arrest device,
**characterized in**
**that** said outlet unit (3, 3a) is supported, by device of a longitudinal ball bearing as a first bearing element encompassing a vertical longitudinal ball bearing axis (13, 13a) as a second bearing element, on the housing (1), one of said two bearing elements being connected with said outlet unit (3, 3a) and the other of said two bearing elements being in solid connection with a housing (1) of said automated coffee machine.

2. Automated coffee machine according to claim 1,
**characterized in**
**that** said longitudinal ball bearing axis (13, 13a) is vertically attached to a carrier (16, 16a) which is solidly connected with said housing (1) of said automated coffee machine, and that said outlet unit (3, 3a) includes a receiving chassis (9, 9a, 9b) receiving in solid connection said longitudinal ball bearing (12).

3. Automated coffee machine according to claim 1,
**characterized in**
**that** said longitudinal ball bearing axis (13, 13a) is vertically attached to a receiving chassis (9, 9a, 9b) of said outlet unit (3, 3a) and that said longitudinal ball bearing is in solid connection with a carrier (16, 16a) on said housing (1).

4. Automated coffee machine according to claim 2,
**characterized in**
**that** said receiving chassis (9, 9a, 9b) includes a vertical wall (10, 10a) on the first side of which said coffee outlet pipe (6, 6a) and a section of a coffee inlet duct (8) connected to it are provided and on the second side of which said longitudinal ball bearing (12) is disposed and said arrest device is arranged.

5. Automated coffee machine according to claim 4,
**characterized in**
**that** from the first side of said receiving chassis (9, 9a, 9b) a horizontal wall section (11) is projecting which carries said coffee outlet pipe (6, 6a).

6. Automated coffee machine according to at least one of claims 4 and 5,
**characterized in**
**that** from said second side of said receiving chassis (9, 9a, 9b) a projection (11, 11a) is protruding in which said longitudinal ball bearing is disposed and at which said arresting device engages.

7. Automated coffee machine according to at least one of the foregoing claims,
**characterized in**
**that** said receiving chassis (9, 9a, 9b), essentially with the exception of the side facing housing (1) of said automated coffee machine, or the carrier, respectively, is covered by a cap (17).

8. Automated coffee machine according to at least one of the foregoing claims,
**characterized in**
**that** said arresting device comprises at least two arresting elements of which a first arresting element is connected to said outlet unit (3, 3a) and the second arresting element is attached to a housing (1) of said automated coffee machine, that one of said two arresting elements comprises an adhesive magnet (15) and that the other of the said arresting elements (16) is ferromagnetic.

9. Automated coffee machine according to claim 8,
**characterized in**
**that** said adhesive magnet (15) is limitedly movably disposed in a recess (14) of said receiving chassis (9) and that said ferromagnetic arresting element (16) is attached to said housing in a manner essentially facing said adhesive magnet (15).

10. Automated coffee machine according to at least one of claims 1 through 7,
**characterized in**
**that** to said receiving chassis (9a, 9b) a vertical toothed rack (21) is attached which is in gearing connection (35) with a drive motor (24) provided in housing (1) of said automated coffee machine and that said gearing connection (35) with said drive motor (24) is self-locking.

11. Automated coffee machine according to claim 10,
**characterized in**
**that** a driving pinion (36) connected with said drive motor (24) engages into said toothed rack (21).

12. Automated coffee machine according to at least one of claims 10 and 11,
**characterized in**
**that** in an electric switching arrangement of the said drive motor an up-and-down switch (26) is disposed by which a height adjustment, up or down, of said outlet unit (3a) can be controlled.

13. Automated coffee machine according to at least one of claims 1 through 12,
**characterized in**
**that** in said switching arrangement limit switches are provided by which, in an upper limit position of said outlet unit (3a) and a lower limit position of said outlet unit (3a), said drive motor (24) can be switched off and reversal of the direction of rotation of said drive motor (24) on reaching one of the limit positions can be preset.

14. Automated coffee machine according to claim 13,
**characterized in**
**that** said limit switches are arranged as a head contact (22) and as a foot contact (23) in the movement path of said receiving chassis (9a, 9b).

15. Automated coffee machine according to one of claims 1 through 12,
**characterized in**
**that** a displacement encoder is coupled to said drive motor which is suited to detect an upper limit position and a lower limit position of said outlet unit (3a) and the reversal of the direction of rotation of said drive motor (24) on reaching one of the limit positions can be prepared.

16. Automated coffee machine according to at least one of the foregoing claims,
**characterized in**
**that** a sensor arrangement is provided on said outlet unit (3a) which is suited to detect the height of a cup (4, 5) placed under said outlet pipe and which is disposed in said switching arrangement of said drive motor (24) so that it switches it off when, on moving said outlet unit (3a) downward, the height of the cup has been detected.

17. Automated coffee machine according to claim 16,
**characterized by**
a light barrier arrangement (28, 28a) as the said sensor arrangement.

18. Automated coffee machine according to claim 16,
**characterized by**
a laser approximation or reflection arrangement (31, 31 a) as the said sensor arrangement.

19. Automated coffee machine according to one of claims 13 through 18,
**characterized in**
**that** said switching arrangement of said drive motor comprises a relay (34) including a starter switch (19) and that in the circuit of said drive motor (24) switch-over contacts (32, 33), limit contacts (22, 23) as well as a light barrier contact, or laser sensor contact (30), respectively, actuated by said relay (34) are arranged in such a way that by actuating said starter switch (19) and hence activating said relay (34) said outlet unit (3a) travels from an upper limit position downward to the cup height, stops on detection of the cup height by said sensor arrangement (28, 28a; 31, 31 a) and hence actuation of the light barrier contact, or the laser sensor contact (30), respectively, and travels back into the upper limit position after finalisation of the brewing process or removal of the cup (4, 5) by opening said starter switch (19).

20. Automated coffee machine according to claim 19,
**characterized in**
**that** said switching arrangement in series to said starter switch (19) comprises an additional sensor contact (29) controlled by a sensor (27) which detects a presence of a cup (4, 5) placed under said outlet pipe (6, 6a).

## Revendications

1. Automate à café avec unité d'écoulement (3, 3a) réglable en hauteur et blocable, qui présente au moins une conduite d'écoulement du café (6, 6a) en communication de fluide avec un dispositif d'humection de la mouture, est réglable en hauteur en continu par rapport à un support de tasse et est blocable au moyen d'un dispositif d'arrêt,
**caractérisé en ce que**
l'unité d'écoulement (3, 3a) est logée au niveau du boîtier (1) au moyen d'une butée à billes (12), en tant que premier élément d'appui, qui entoure un axe de butée à billes vertical (13, 13a) en tant que deuxième élément d'appui, l'un des deux éléments d'appui étant relié à l'unité d'écoulement (3, 3a) et l'autre des deux éléments d'appui étant relié de façon fixe à un boîtier (1) de l'automate à café.

2. Automate à café selon la revendication 1,
**caractérisé en ce que**
l'axe de butée à billes vertical (13, 13a) est disposé verticalement contre un support (16, 16a) qui est relié de façon fixe au boîtier (1) de l'automate à café, et **en ce que** l'unité d'écoulement (3, 3a) présente un châssis de réception (9, 9a, 9b) qui reçoit et est relié de façon fixe à la butée à billes (12).

3. Automate à café selon la revendication 1,
**caractérisé en ce que**
l'axe de butée à billes (13, 13a) est disposé verticalement contre un châssis de réception (9, 9a, 9b) de l'unité d'écoulement (3, 3a) et **en ce que** la butée à billes est reliée de façon fixe à un support (16, 16a) sur le boîtier (1).

4. Automate à café selon la revendication 2,
**caractérisé en ce que**
le châssis de réception (9, 9a, 9b) présente une paroi verticale (10, 10a) sur le premier côté de laquelle sont disposés la conduite d'écoulement du café (6, 6a) et une partie, reliée à celui-ci, d'une conduite d'arrivée du café (8), et sur le second côté de laquelle repose la butée à billes (12) et est disposé le dispositif d'arrêt.

5. Automate à café selon 1a revendication 4,
**caractérisé en ce que**
fait saillie du premier côté du châssis de réception (9, 9a, 9b) une partie de paroi (11) horizontale qui supporte la conduite d'écoulement du café (6, 6a).

6. Automate à café selon au moins l'une des revendications 4 et 5,
**caractérisé en ce que**
dépasse du second côté du châssis de réception (9, 9a, 9b) une partie en saillie (11, 11a) dans laquelle est logée la butée à billes et sur laquelle s'engage le dispositif d'arrêt.

7. Automate à café selon au moins l'une des revendications précédentes,
**caractérisé en ce que**
le châssis de réception (9, 9a, 9b) est, pour l'essentiel, recouvert d'un capot (17), à l'exception du côté orienté vers le boîtier (1) de l'automate à café ou vers le support.

8. Automate à café selon au moins l'une des revendications précédentes,
**caractérisé en ce que**
le dispositif d'arrêt comprend au moins deux éléments d'arrêt, dont un premier élément d'arrêt est relié à l'unité d'écoulement (3, 3a) et le second élément d'arrêt est disposé au niveau d'un boîtier (1) de l'automate à café, **en ce que** l'un des deux éléments d'arrêt comprend un aimant d'adhésion (15) et **en ce que** l'autre des deux éléments d'arrêt (16) est ferromagnétique.

9. Automate à café selon la revendication 8,
**caractérisé en ce que**
l'aimant d'adhésion (15) est disposé de façon à coulisser, et avec une limite dans la direction horizontale, dans un évidement (14) du châssis de réception (9), et **en ce que** l'élément d'arrêt (16) ferromagnétique, disposé sur le boîtier, fait sensiblement face à l'aimant d'adhésion (15).

10. Automate à café selon au moins l'une des revendications 1 à 7,
**caractérisé en ce que**
sur le châssis de réception (9a, 9b) est disposée une crémaillère (21) verticale reliée par engrenage (35) à un moteur d'entraînement (24) disposé dans le boîtier (1) de l'automate à café, et **en ce que** la liaison par engrenage (35) avec le moteur d'entraînement (24) est autobloquante.

11. Automate à café selon la revendication 10,
**caractérisé en ce**
**qu'**un pignon menant (36) en relation avec le moteur d'entraînement (24) s'engrène dans la crémaillère (21).

12. Automate à café selon au moins l'une des revendications 10 et 11,
**caractérisé en ce**
**qu'**est disposé dans un dispositif de circuit du moteur d'entraînement un interrupteur montée-descente (26) permettant de commander vers le haut ou vers le bas un réglage en hauteur de l'unité d'écoulement (3a).

13. Automate à café selon au moins l'une des revendications 1 à 12,
**caractérisé en ce que**
sont disposés dans le dispositif de circuit des interrupteurs de fin de course permettant de mettre hors circuit le moteur d'entraînement (24) dans une position extrême supérieure de l'unité d'écoulement (3a) et dans une position extrême inférieure de l'unité d'écoulement (3a), et de préparer une inversion du sens de rotation du moteur d'entraînement (24) au moment où l'une des positions extrêmes est atteinte.

14. Automate à café selon la revendication 13,
**caractérisé en ce que**
les interrupteurs de fin de course sont disposés en tant que contact de tête (22) et contact de base (23) dans la trajectoire de déplacement du châssis de réception (9a, 9b).

15. Automate à café selon l'une des revendications 1 à 12,
**caractérisé en ce**
**qu'**est couplé au moteur d'entraînement un codeur de déplacement apte à détecter une position extrême supérieure et une position extrême inférieure de l'unité d'écoulement (3a), et en ce que peut être préparée une inversion du sens de rotation du moteur d'entraînement (24) au moment où l'une des positions extrêmes est atteinte.

16. Automate à café selon au moins l'une des revendications précédentes,
**caractérisé en ce**
**qu'**est disposé sur l'unité d'écoulement (3a) un dispositif de détection qui est apte à détecter une hauteur d'une tasse (4, 5) placée au-dessous de la conduite d'écoulement et en ce qu'il est disposé dans le dispositif de circuit du moteur d'entraînement (24) de manière à mettre celui-ci hors circuit lorsque la hauteur de la tasse est détectée lors d'un déplacement de l'unité d'écoulement (3a) vers le bas.

17. Automate à café selon la revendication 16,
**caractérisé par**
un ensemble à barrières lumineuses (28, 28a) en tant que dispositif de détection.

18. Automate à café selon la revendication 16,
**caractérisé par**
un ensemble de détecteurs de proximité laser ou à réflexion (31, 31a) en tant que dispositif de détection.

19. Automate à café selon l'une des revendications 13 à 18,
**caractérisé en ce que**
le dispositif de circuit du moteur d'entraînement comprend un relais (34) avec un commutateur de démarrage (19), et **en ce que** sont disposés dans le trajet du courant du moteur d'entraînement (24) des contacts d'inversion (32, 33) commandés par le relais (34), des contacts de fin de course (22, 23) ainsi qu'un contact de barrière lumineuse ou un contact de détecteur laser (30), de façon telle que par un actionnement du commutateur de démarrage (19) et par conséquent une activation du relais (34), l'unité d'écoulement (3a) descend d'une position extrême supérieure jusqu'au niveau de la tasse, s'arrête lors de la détection de la hauteur de tasse par le dispositif de détection (28, 28a; 31, 31a) et par conséquent de l'actionnement du contact de barrière lumineuse ou du contact de détecteur laser (30), et qu'après la fin du processus d'humection de la mouture ou l'enlèvement de la tasse (4, 5), elle revient à la position extrême supérieure par ouverture du commutateur de démarrage (19).

20. Automate à café selon la revendication 19,
**caractérisé en ce que**
le dispositif de circuit présente, en série avec le commutateur de démarrage (19), un contact de détecteur (29) supplémentaire commandé par un capteur (27) qui détecte la présence d'une tasse (4, 5) placée au-dessous de la conduite d'écoulement (6, 6a).
